(19) Europäisches Patentamt
European Patent Office
Office européen des brevets

(11) **EP 4 045 944 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **20789440.3**

(22) Anmeldetag: **26.09.2020**

(51) Internationale Patentklassifikation (IPC):
*G01T 1/164* *(2006.01)*

(52) Gemeinsame Patentklassifikation (CPC):
**G01T 1/1644**

(86) Internationale Anmeldenummer:
**PCT/DE2020/000222**

(87) Internationale Veröffentlichungsnummer:
**WO 2021/073668 (22.04.2021 Gazette 2021/16)**

(54) **VERFAHREN ZUR POSITIONS- UND ENERGIEBESTIMMUNG IN SZINTILLATIONSDETEKTOREN**

METHOD FOR THE POSITION AND ENERGY DETERMINATION IN SCINTILLATION DETECTORS

PROCÉDÉ DE DÉTERMINATION DE POSITION ET D'ÉNERGIE DANS DES DÉTECTEURS À SCINTILLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2019 DE 102019007136**

(43) Veröffentlichungstag der Anmeldung:
**24.08.2022 Patentblatt 2022/34**

(73) Patentinhaber: **Forschungszentrum Jülich GmbH 52425 Jülich (DE)**

(72) Erfinder:
• **LERCHE, Christoph**
**52134 Herzogenrath (DE)**
• **BI, Wenwei**
**52428 Jülich (DE)**
• **SHAH, Nadim, Joni**
**52428 Jülich (DE)**

(56) Entgegenhaltungen:
**US-A1- 2018 059 266**

• **CH W LERCHE ET AL: "Fast circuit topology for spatial signal distribution analysis", 1 January 2010 (2010-01-01), pages 1 - 8, XP008155574, Retrieved from the Internet <URL:http://ieeexplore.ieee.org/stamp/stamp.jsp?tp=&arnumber=5750391> DOI: 10.1109/RTC.2010.5750391**
• **WANG RUI ET AL: "Absolute Gamma Source Positioning with Position-sensitive Scintillation Detector Arrays", 2018 IEEE NUCLEAR SCIENCE SYMPOSIUM AND MEDICAL IMAGING CONFERENCE PROCEEDINGS (NSS/MIC), IEEE, 10 November 2018 (2018-11-10), pages 1 - 4, XP033612792, DOI: 10.1109/NSSMIC.2018.8824371**

**Beschreibung**

Die Erfindung betrifft ein Verfahren zur Positions- und Energiebestimmung in Szintillationsdetektoren.

Szintillationsdetektoren sind elementare Bestandteile verschiedenster Teilchendetektoren, welche in der Teilchen- und Neutrinophysik, der Nuklearmedizinischen (z.B. Positronen Emissions Tomographie (PET), oder Compton Kameras und Single Photon Computed Tomography (SPECT)), der radiologischen Bildgebung und im Strahlenschutz zum Einsatz kommen. Szintillationsdetektoren werden hauptsächlich für die Detektion von Teilchen, welche Szintillationsereignisse auslösen können, beispielsweise Gammafotonen, $\alpha$- Teilchen oder $\beta$-Teilchen eingesetzt. Grundsätzlich können es Elementarteilchen, wie Leptonen oder Gamma- oder Röntgenphotonen sein, oder aus Elementarteilchen zusammengesetzte Teilchen sein, wie Mesonen, Baryonen oder Ionen. Ein Szintillationsdetektor besteht dabei immer aus einem Szintillator und einem Fotodetektor. Szintillatoren können dabei in monokristalliner form (z.B. BGO, LSO, etc.), polykristalliner Form (z.B. Ultra Fast Ceramics), flüssiger Form (z.B. Xenon) oder gasförmiger Form (z.B. High Pressure Xenon) verwendet werden. Festkörperszintillatoren können als kontinuierliche Kristalle oder als vollständige oder teilweise segmentierte Kristalle vorliegen. Bei vollständig segmentierten Szintillatoren werden die einzelnen Szintillatorsegmente auch Szintillatorpixel genannt. Die einzelnen Szintillatorsegmente sind normalerweise teilweise oder vollständig optisch voneinander getrennt, z.B. durch halbdurchlässige, undurchlässige oder reflektierende Schichten. Ein Szintillator, welcher aus mehreren Szintillatorsegmenten besteht, wird Szintillatorarray oder Szintillatormatrix genannt. Als Fotodetektoren kommen Photomultiplier tubes (PMTs), Multi Channel Plates (MCP), Avalanche Photodiodes (APDs) und Silicon Photomultiplier (SiPMs). Dabei können die SiPMs entweder in analoger Technologie (aSiPMs) oder in digitaler Technologie ausgeführt sein (dSiPM).

In vielen Anwendungen von Szintillationsdetektoren ist es erforderlich, dass neben der Bestimmung der Energie des Teilchens auch die Ankunftszeit des Teilchens und idealerweise die dreidimensionale Position, mindestens aber die zweidimensionale Position der Fotokonversion innerhalb des Szintillatorvolumens bestimmt wird.

Bei zweidimensionaler Positionsbestimmung wird die Fotokonversionsposition in einer Ebene parallel zur fotosensiblen Fläche der Fotodetektoren bestimmt. Diese beiden Koordinaten werden im weiteren Verlauf als x-koordinate und y-koordinate bezeichnet. Die zusätzliche dritte Koordinate bei dreidimensionaler Fotokonversionspositionsbestimmung wird im Allgemeinen als Tiefenwechselwirkung (engl. Depth of Interaction) bezeichnet und wird im weiteren Verlauf als z-Koordinate bezeichnet.

Die Messung der Ankunftszeit des Teilchens erfolgt in den meisten Fällen durch die den Fotodektoren nachgeschaltete Analyseelektronik, z.B. durch Schwellenwertdiskriminatoren oder Constant Fraction Discriminators oder Kombinationen der beiden. Bei dSiPMs kann die Ankunftszeit der einzelnen Photonen direkt im Fotodetektor ohne eine nachgeschaltete Analyseelektronik gemessen und direkt für die Messdatenverarbeitung bereitgestellt werden.

Zur Bestimmung der Fotokonversionsposition sind positionssensitive Fotodetektoren erforderlich. Hierfür werden Positionsensitive Photomultipler Tubes (PSPMTs), Micro Channel Plates, (MCPs), APD arrays, und SiPM arrays verwendet. Letztere bestehen aus Matrizen von normalerweise unabhängigen, individuellen SiPMs oder APDs, welche durch elektronische Integration zu einem Modul zusammengefasst werden. PSPMTs werden normalerweise durch segmentierte Anoden, einer gemeinsamen Fotokathode und fokussierenden Dynoden realisiert, weshalb die einzelnen Anodenelemente nicht unabhängig voneinander arbeiten. Sowohl die Anodensegmente von PSPMTs und MCPs als auch die individuellen SiPMs und APDs von SiPM arrays und APD arrays werden als Fotodetektorpixel bezeichnet.

Ein eintreffendes Gammafoton, auch primäres Gammafoton genannt, tritt mit dem Szintillator via Photoeffekt, Paarerzeugung oder Compton-Effekt in Wechselwirkung. Beim Photoeffekt wird die Energie des primären Gammafotons vollständig auf ein Elektron des Szintillators übertragen, welches anschließend das Szintillatormaterial anregt. Beim Compton-Effekt wird nur ein Teil der Energie des primären Gammafotons auf ein Elektron des Szintillators übertragen, welches anschließend das Szintillatormaterial anregt. Das Gammafoton behält die restliche Energie und kann erneut mit dem Szintillator via Photoeffekt oder Compton-Effekt wechselwirken. Dieser Vorgang wiederholt sich so lange, bis es zu einer Wechselwirkung via Photoeffekt kommt, bei welchem das Gammafoton vernichtet wird oder das Gammafoton den Szintillator ohne weitere Wechselwirkung verlässt. Letzteres Ereignis wird Comptonescape genannt. Ein Ereignis mit mehreren Wechselwirkungen wird Comptonkaskade genannt. Bei Paarerzeugung werden ein Positron und ein Elektron erzeugt und die Energie des primären Gammafotons wird vollständig auf diese beiden Teilchen übertragen.

Im Gegensatz zu den Gammafotonen ist die Reichweite der Elektronen, nämlich Fotoelektronen und Comptonelektronen und der Positronen im Szintillator sehr gering ($<\_$ 150 $\mu$m bei Elektronenenergien von 511 keV). Die vom Elektron oder Positron an den Szintillator abgegebenen Energie regt die Szintillationszentren des Szintillators an, welche anschließend zerfallen und dabei Szintillationslicht in einem kurzen Zeitintervall isotrop abgeben. Dabei ist die Anzahl der Szintillationsfotonen annähernd proportional zur vom Teilchen, beispielsweise einem Gammafoton, bei der Wechselwirkung abgegebenen Energie. Bei vollständigen Comptonkaskaden, d.h. dass Teilchen wird vollständig im Szintillator in Szintillationslicht umgewandelt und es findet kein Comptonescape statt, ist deshalb die Gesamtanzahl der Szintillationsfotonen annähernd proportional zur Energie des primären Teilchens, beispielsweise Gammafotons. Der Vorgang, bei dem von dem Gammafoton Energie über das Foto- oder Comptonelektron auf den Szintillatorkristall übertragen wird und diese in Szintillationsfotonen umgewandelt wird, heißt Fotokonversion.

Ein Ereignis, bei welchem in einer oder mehreren Fotokonversionen die Energie genau eines primären Gammafotons oder Teilchens in Szintillationslicht umgewandelt wird, soll im weiteren Szintillationsereignis genannt werden.

Das in dem kurzen Zeitintervall abgegebene Szintillationslicht bzw. ein vom Fotodetektor hierzu proportionales Signal, z.B. Spannung, Strom oder Ladung, wird entweder direkt vom Fotodetektor und von einer nachgeschalteten Elektronik über ein definiertes, immer gleiches Zeitintervall integriert. Die Integration wird durch eine Auslöseelektronik gestartet, welche die am Anfang des Szintillationspulses schnell steigende Szintillationslichtintensität mit einem Schwellenwert vergleicht (Schwellenwertdiskriminator) und die Integration bei Überschreiten des Schwellenwerts startet. Dieser Schwellenwert wird so gewählt, dass er ausreichend groß im Vergleich zum thermischen Rauschen des Photodetectors oder andern Rauschquellen ist, sodass ein kontinuierliches auslösen der Integration aufgrund des von Rauschsignalen vermieden wird. In digitalen SiPMs kann die Integration direkt im SiPM und durch Zählen der aktiven micro-Zellen (auch Single Avalanche Photodiodes (SAPDs) genannt) des SiPM erfolgen.

Wegen der isotropen Abstrahlung des Szintillationslichts müsste der Szintillator zur vollständigen Detektion des Szintillationslichtes vollständig mit Fotodetektoren umschlossen werden. Aus wirtschaftlichen Gründen und wegen der technischen Realisierbarkeit wird normalerweise nur eine Seitenfläche des Szintillators optisch an einen Fotodetektor gekoppelt. Die verbleibenden Seitenflächen werden mit einem Reflektor beschichtet, welcher die Szintillationsfotonen reflektiert, sodass sie nach ein oder mehreren internen Reflektionen den Fotodetektor erreichen. Sowohl bei kontinuierlichen Szintillatoren als auch segmentierten . Szintillatoren bzw. Szintillatorarrays, ergibt sich in der Ebene des optisch angekoppelten Fotodetektors, positionssensitiven Fotodetektors oder des Fotodetektorarrays aufgrund der isotropen Emission der Szintillationsfotonen und den internen Reflektionen an den restlichen Szintillatoroberflächen eine charakteristische Szintillationslichtverteilung. Diese Szintillationslichtverteilung weißt in der x-y-Ebene, also der Ebene parallel zu der sensitiven Fläche des Fotodetektors, ein Maximum an der Fotokonversionsposition auf. Diese Position soll im weiteren Verlauf $(x_{PK}, y_{PK})$ bezeichnet werden. Je größer der Abstand des Fotodetektorpixels von der Position $(x_{PK}, y_{PK})$ in der x-y-Ebene ist, desto kleiner wird die vom Fotodetektorpixel detektierbare Szintillationslichtmenge. Bei ausreichend großem Abstand von $(x_{PK}, y_{PK})$ kann die Szintillationslichtmenge auch gegen Null gehen.

Aus dieser Szintillationslichtverteilung kann die Energie und die Fotokonversionsposition des Gammafotons bestimmt werden. Durch das Einfügen eines Lichtleiters, welcher im einfachsten Fall aus einer für das Szintillationslicht transparenten Materialschicht besteht, lässt sich die Szintillationslichtverteilung leicht variieren und an die Fotodetektorpixelgröße für eine optimale Fotokonversionspositionsbestimmung anpassen. Der am weitesten verbreitete Algorithmus zur Bestimmung der Energie und der Fotokonversionsposition ist die Bestimmung des Erwartungswertes, die auch Anger-Methode genannt wird, nach seinem Erfinder Hal Anger. Für ein Fotodetektorarray mit $N_x$ Fotodetektorpixeln in x-Richtung und $N_y$ Fotodetektorpixeln in y-Richtung lassen sich nach dieser Methode die Energie $\langle E \rangle_{Anger}$ und die beiden Koordinaten $\langle X \rangle_{anger}$ und $\langle Y \rangle_{Anger}$ der Fotokonversionsposition gemäß

$$\langle E \rangle_{Anger} = \sum_{i_x}^{N_x} \sum_{i_y}^{N_y} q_{i_x, i_y} \qquad (1)$$

$$\langle X \rangle_{Anger} = \frac{1}{\langle E \rangle_{Anger}} \sum_{i_x}^{N_x} \sum_{i_y}^{N_y} x_{i_x} \cdot q_{i_x, i_y} \qquad (2)$$

$$\langle Y \rangle_{Anger} = \frac{1}{\langle E \rangle_{Anger}} \sum_{i_x}^{N_x} \sum_{i_y}^{N_y} y_{i_y} \cdot q_{i_x, i_y} \qquad (3)$$

bestimmen, wobei $i_x = 1, \dots, N_x$ der Fotodetektorpixelindex in x-Richtung, $i_y = 1, \dots, N_y$ der Fotodetektorpixelindex in y-Richtung, $x_{i_x}$ die Schwerpunktposition des $i_x$-ten Fotodetektorpixelindex in x-Richtung, $y_{i_y}$ die Schwerpunktposition des $i_y$-ten Fotodetektorpixelindex in y-Richtung und $q_{i_x, i_y}$ die von den Fotodetektorpixeln $(i_x, i_y)$ detektierten Signale sind, welche proportional zur über die Gesamtfläche der Fotodetektorpixel an der Position $(x_{i_x}, y_{i_y})$ und in einem definierten Zeitintervall integrierte Szintillatorlichtmenge sind. Je nach verwendetem Fotodetektor und dessen elektrischer Ausgangsschaltung können die $q_{i_x, i_y}$ hierbei analoge oder digitale Werte, die Anzahlen der aktiven micro-cells oder Single Avalanche Photodiods (SPAD), Ladungen oder Spannungen oder Ströme sein. Die durch Formeln 1 - 3 beschriebene Methode zur Energie- und Fotokonversionspositionsbestimmung kann gemäß (Chen-Yi & Goertzen, 2013 [1]) verbessert werden, indem man die Signale $q_{i_x, i_y}$ durch gewichtete Signale $w_{i_x, i_y} q_{i_x, i_y}$ ersetzt, wobei die $w_{i_x, i_y}$ individuell zu bestimmen sind.

Die Bestimmung der Energie und der Fotokonversionsposition mit Hilfe der Gleichungen 1 - 3 oder nach [1] weist jedoch zwei erhebliche Nachteile auf. Erstens berücksichtigt sie nicht, dass die Detektion von Fotonen ein Poissonprozess ist, weshalb die Signale $q_{i_x,i_y}$ einer Poissonstatistik folgen, und der statistische Messfehler von $q_{i_x,i_y}$ proportional zu $\sqrt{q_{i_x,i_y}}$ ist. Hierdurch ergeben sich bei geringen Lichtmengen große statistische Unsicherheiten für $\langle X \rangle_{Anger}$ und $\langle Y \rangle_{anger}$. Zweitens bestehen Fotodetektorarrays oft aus individuellen, einzelnen Fotodetektorpixeln, die vollständig unabhängig voneinander arbeiten. Insbesondere arbeiten auch die Auslöseelektroniken für die zeitlichen Integrationen der Signale jedes einzelnen Fotodetektorpixels unabhängig von allen anderen Fotodetektorpixeln des Fotodetektorarrays. Gleiches kann auch für MCPs und PSPMTs gelten. Im Zusammenspiel mit der Szintillationslichtverteilung kann die detektierbare Lichtmenge für Fotodetektorpixelpositionen, welche weit von $(x_{PK},y_{PK})$ entfernt sind, einen Wert annehmen, welcher nahe an dem Schwellenwert für den Fotodetektorpixel $(i_x,i_y)$ liegt. Wegen der Poissonstatistik der Signale $q_{i_x,i_y}$ führt dies zum Effekt, dass die Integration des Signals für Fotodetektorpixel $(i_x,i_y)$ mit großem Abstand von $(x_{PK},y_{PK})$ zufällig ausgelöst wird, je nachdem ob das Signal, welches Poissonfluktuationen unterliegt, oberhalb oder unterhalb des Schwellenwerts liegt. Wird die Integration des zum Szintillationslicht proportionalen Signals nicht gestartet, ergibt sich für diesen Fotodetektorpixel das Signal $q_{i_x,i_y} = 0$. Dies bedeutet, dass sich die Anzahl von Fotodetektorpixeln mit $q_{i_x,i_y} > 0$ von Szintillationsereignis zu Szintillationsereignis unterscheidet und hat zur Folge, dass die nach Formeln 2 und 3 berechne-ten Positionen ($\langle X \rangle_{Anger} \langle Y \rangle_{Anger}$) erhebliche statistische Fehler aufweisen können (Lerche, et al., 2016 [2]). In (Schug, et al., 2015 [3]) wird dieses Problem dadurch umgangen, indem die Signale $q_{i_x,i_y}$ der Fotodetektorpixel ohne Signal, also diejenigen, bei denen die Integration nicht ausgelöst wurde, da die integrierte Szintillationslichtmenge wegen der Poissonfluktuation unter dem Schwellenwert liegt, durch einen Wert ersetzt, welcher aus den Signalen mit $q_{i_x,i_y} > 0$ für das gleiche Szintillationsereignis linear extrapoliert wird. Das extrapolierte Signal entspricht jedoch nicht der wirklichen Szintillationslichtmenge für den entsprechenden Fotodetektorpixel und es kann das Signal für maximal einen Foto-detektorpixel mit $q_{i_x,i_y} = 0$ extrapoliert werden.

Eine zu Gleichungen 1 - 3 alternative Methode der Energie und Positionsbestimmung von Szintillationsereignissen ist die Bestimmung des Maximum Likelihood (ML) Schätzwertes wie in (DeWitt, et al., 2010 [4]), (Johnson-Williams, et al., 2010 [5]), (Wang, et al., 2016 [6]) und [2] beschrieben. In [4], [5], und [6], werden iterative ML Algorithmen zur Bestimmung der 2D oder 3D Position des Szintillationsevents in kontinuierlichen Szintillatoren beschrieben, welche für die Implementierung in Field Programmable Gate Arrays (FPGAs) geeignet sind. In den Implementierungen nach [4] und [5] werden die Poissonverteilungen der Fotodetektorpixelsignale durch Gaußverteilungen angenähert. In [2] wird eine iterative ML Implementierung zur Bestimmung der 2D Position und der Energie des Gammafotons oder eines andern Teilchens in segmentierten Szintillatoren beschrieben. Für diese letzte Implementierung konnte gezeigt werden, dass das oben beschriebene Problem, bei welchem wegen der Poissonfluktuationen Foto-detektorpixel mit $q_{i_x,i_y} = 0$ auftreten können, effektiv gelöst werden kann, da ML basierte Algorithmen es erlauben, die Position und Energie des Szintillationsereignisses ausschließlich anhand der Fotodetektorpixel mit Signalen $q_{i_x,i_y} > 0$, also mit unvollständigen Daten zu bestimmen. Darüber hinaus ist es bei der Verwendung von ML basierten Verfahren möglich, die Schwellenwerte der einzelnen Fotodetektorpixel gezielt anzuheben. Dadurch wird erreicht, dass pro Szintillationsereignis weniger Fotodetektorpixel Signale mit Werten über den entsprechenden Schwellenwerten messen und daher insgesamt weniger Integrationen ausgelöst werden, was die Gesamttotzeit des Szintillationsdetektors verringert. Wurde die Integration des Signals von einem Fotodetektorelement ausgelöst, kann bis zum Ende der Integration und eventueller weiterer Datenverarbeitungsschritte danach keine weitere Integration ausgelöst werden. Während dieser Zeit kann kein weiteres Szintillationsereignis detektiert werden. Diese Zeit nennt man Totzeit des Detektors. Zusätzlich müssen weniger Signale übertragen werden, denn Signalwerte $q_{i_x,i_y} = 0$ werden nicht an die Datenakquiseeinheit weitergeleitet, da sie keine Information enthalten, weshalb die zu übertragende Datenmenge reduziert wird. Eine Anhebung des Schwellenwertes ist mit dem Standardverfahren nach Gleichung 1 - 3 nicht ohne eine Verminderung der Präzession der Positions- und Energiewerte möglich.

Wichtigster Nachteil der Anger Methode ist das bereits oben beschriebene Problem, bei welchem wegen der Poissonfluktuationen Fotodetektorpixel mit $q_{i_x,i_y} = 0$ auftreten können, welches zu erheblicher Falschpositionierung führen kann [2]. Darüber hinaus sind die Signale $q_{i_x,i_y}$ mit weiteren Messfehlern behaftet, welche zu den Poissonfluktuationen hinzukommen. Die Ursachen für diese zusätzlichen Messfehler sind Toleranzen bei der Produktion der PSPMTs, MCPs, SiPM arrays oder APD arrays, welche sich vor allem durch unterschiedliche intrinsische Signalverstärkungen und damit durch unterschiedliche Signalstärken bei eigentlich gleicher Szintillationslichtmenge bemerkbar machen. Weitere mögliche Produktionstoleranzen treten bei der Positionierung der einzelnen Fotodetektorpixel auf, d.h. auch die Fotodetektorpixelpositionen $(x_{i_x}, y_{i_y})$, welche als Gewichtungsfaktoren in die Gleichungen 1 3 eingehen, sind wegen Produktionstoleranzen fehlerbehaftet. Produktionstoleranzen treten auch bei der Produktion von kontinuierlichen Szintillatoren und segmentierten Szintillatoren auf, zum Beispiel kleine Variationen in der Szintillatorsegmentgröße und in der Szintillatorlichtmenge pro Teilchenenergieeinheit (engl. Lightyield), Variationen in der Reflektivität der Szintillatoroberflächen, Variationen in der Transparenz optischer Kopplungen, etc. Aufgrund dieser und weiterer Fehlerquellen ist die mit Gleichungen 1 - 3 bestimmte Energie und Position des Szintillationsereignisses fehlerbehaftet und erfordert eine Korrektur der Energie $\langle E \rangle_{Anger}$ und der Position ($\langle X \rangle_{Anger} \langle Y \rangle_{Anger}$) im Anschluss an deren Bestimmung. Die Korrekturwerte müssen mit Hilfe einer Kalibrationsmessung unabhängig für jeden PSPMT, MCP, jedes SiPM array, jedes APD array, jeden kontinuierlichen Szintillator und jeden segmentierten Szintillator bestimmt werden und wegen Alterungseffekten der Komponenten regelmäßig wiederholt werden.

Bei der Verwendung von ML basierten Methoden zur Bestimmung der Energie und der Position des Szintillationsevents sind Wertetabellen (Look-up-tables, LUTs) mit Energie und Positionsreferenzwerten erforderlich. Erforderliche Kalibrationsdaten können in diese Referenzwerttabellen integriert werden, indem man für jeden Szintillationsdetektor eine eigene Referenzwerttabelle erstellt. Allerdings sind die erforderlichen Referenzwerttabellen in allen bisherigen ML basierten Methoden so groß, dass es nicht möglich ist, die Referenzwerttabellen für alle Szintillationsdetektoren eines vollständigen PET oder SPECT Scanners in schnell zugänglichem Speicher (z.B. QDR RAM, UltaRAM, BRAM und FlipFlops in FPGAs und Cache in CPUs und GPUs) abzulegen. Die Referenztabellen müssen deshalb in externen SDRAM oder DRAM Bausteinen abgelegt werden, was sich aber wegen der deutlich niedrigeren Lesegeschwindigkeit dieser Speichertypen sehr nachteilig auf die Gesamtberechnungszeit der Energie und Position des Szintillationsereignisses auswirkt.

Zusätzlich sind alle bisher bekannten ML basierten Methoden zur Bestimmung der Energie und der Position des Szintillationsevents iterativ formuliert. Das bedeutet, der Algorithmus muss mehrmals durchlaufen werden, bevor das endgültige Ergebnis vorliegt. Anhand einer im Voraus definierten Abbruchbedingung, welche in den meisten Fällen evaluiert, ob eine gewünschte Präzession des Ergebnisses erreicht wurde, wird für jedes individuelle Szintillationsereignis entschieden, ob weitere Iterationen erforderlich sind. Als Folge einer solchen Definition ergeben sich Iterationszahlen, welche vom individuellen Szintillationsereignis abhängen, was sich nachteilig auf die FPGA Implementierbarkeit und die Gesamtberechnungszeit auswirkt. Alternativ kann im Vorfeld eine im Durchschnitt optimale Iterationszahl festgelegt werden. Diese verbessert die FPGA Implementierbarkeit, führt aber zu vielen Berechnungen mit sub-optimaler Iterationszahl. Alle bisher bekannten ML basierten Verfahren [4], [5], [6] und [2] basieren auf einer iterativen Formulierung des Algorithmus und sind deshalb zu langsam, um in angemessener Zeit und mit angemessenem Hardwareaufwand alle Szintillationsereignisse eines typischen PET oder SPECT Scanners zu verarbeiten. Bei einem Humanganzkörper PET Scanner der dem Stand der Technik entspricht, können je nach untersuchtem Organ und verwendetem Radiopharmazeutikum zwischen 2 und 4 Millionen koinzidente Szintillationsereignisse pro Sekunde anfallen, für welche die Energien und die Positionen bestimmt werden müssen. Bei einem dedizierten Organspezifischen PET Scanner, z.B. für Brust oder Kopf, kann diese Rate auch doppelt so hoch sein. Wegen der erforderlichen hohen Datenverarbeitungsgeschwindigkeit werden in Human PET Scannern deshalb bevorzugt Anger basierte Methoden verwendet.

Darüber hinaus werden in PET Scannern, die dem Stand der Technik entsprechen, zunächst Koinzidente Szintillationsereignisse selektiert. Szintillationsereignisse, zu welchen keine Koinzidenten Szintillationsereignisse detektiert werden, sogenannte Singleereignisse, werden ignoriert. Hierdurch wird die Menge der zu verarbeitenden Daten signifikant reduziert. Jedoch erschwert dies andere notwendige Korrekturen, wie die Randomkoinzidenzkorrektur und die Scatterkorrektur. Diese sind bei Verarbeitung aller Koinzidenzereignisse und Singleereignisse präziser und einfacher zu bestimmen. Bei einem Humanganzkörper PET Scanner, der dem Stand der Technik entspricht, können je nach untersuchtem Organ und verwendetem Radiopharmazeutikum zwischen 40 und 80 Millionen Singleszintillationsereignisse pro Sekunde anfallen, für welche die Energien und die Positionen bestimmt werden müssen, um Singlebasierte Randomkoinzidenzkorrektur und die Scatterkorrektur zu ermöglichen.

Der in [5] vorgestellte ML basierte Algorithmus für kontinuierliche Szintillatoren kann bis zu 117000 Szintillationsereignisse pro Sekunde und FPGA verarbeiten. Folglich wären für eine Koinzidenzverarbeitungsplattform bis zu $4 \times 10^6 / 117000 = 44$ FPGAs des in dieser Studie genannten Typs erforderlich. Für eine Singleverarbeitungsplattform wären bis zu $80 \times 10^6 / 117000 = 684$ FPGAs erforderlich. Mit dieser Implementierung wäre es deshalb nicht möglich, eine kosteneffiziente Datenverarbeitungsplattform aufzubauen.

Der in [4] vorgestellte ML basierte Algorithmus für kontinuierliche Szintillatoren kann bis zu 360000 Szintillationsereignisse pro Sekunde und FPGA verarbeiten. Folglich wären für eine Koinzidenzverarbeitungsplattform bis zu $4 \times 10^6 / 360000 = 11$ FPGAs des in dieser Studie genannten Typs erforderlich. Für eine Singleverarbeitungsplattform wären bis zu $80 \times 10^6 / 360000 \approx 223$ FPGAs erforderlich. Mit dieser Implementierung wäre es deshalb nicht möglich, eine kosteneffiziente Datenverarbeitungsplattform aufzubauen.

Der in [6] vorgestellte ML basierte Algorithmus für kontinuierliche Szintillatoren kann bis zu $15 \times 10^6$ Szintillationsereignisse pro Sekunde und FPGA verarbeiten. Folglich wäre für eine Koinzidenzverarbeitungsplattform bis zu $4 \times 10^6 / 15 \times 10^6 = 1$ FPGAs des in dieser Studie genannten Typs erforderlich. Für eine Singleverarbeitungsplattform wären bis zu $80 \times 10^6 / 15 \times 10^6 \approx 6$ FPGAs erforderlich. Mit dieser Implementierung wäre es also möglich, eine kosteneffiziente Datenverarbeitungsplattform aufzubauen. Allerdings werden in dieser Implementierung zunächst die Projektionen der Signale $q_{i_x,i_y}$ auf die x- und y-Achse gemäß Formeln 4 und 5

$$Q_{i_x} = \sum_{i_x}^{N_y} q_{i_x,i_y} \qquad\qquad (4)$$

$$Q_{i_y} = \sum_{i_x}^{N_x} q_{i_x,i_y} \qquad\qquad (5)$$

gebildet. Damit aus den so berechneten $Q_{i_x}$ und $Q_{i_y}$ die Energie und Position der Szintillationsereignisse genügend präzise bestimmt werden kann, muss wieder für alle $q_{i_x,i_y} > 0$ gelten. Deshalb muss der individuelle Schwellenwert der Fotodetektorpixel so niedrig eingestellt werden, dass für alle Fotodetektorpixel Integrationen ausgelöst werden. Wie oben beschrieben, führt das zu einer erheblich erhöhten Detektortotzeit.

Der in [2] vorgestellte ML basierte Algorithmus für segmentierte Szintillatoren kann bis zu 840000 Szintillationsereignisse pro Sekunde in einem Multi-CPU System (CPU = central processing unit) mit 40 Threads verarbeiten. Folglich wären für eine Koinzidenzverarbeitungsplattform bis zu $4 \times 10^6 / 1840000 = 5$ Datenverarbeitungssysteme des in dieser Studie genannten Typs erforderlich (siehe (Schug, et al., 2016 [7]) und (Goldschmidt, et al., 2015 [8]). Für eine Single-verarbeitungsplattform wären bis zu $80 \times 10^6 / 840000 = 95$ Datenverarbeitungssysteme erforderlich. Eine FPGA Implementierung dieser Variante wurde nicht vorgeschlagen und erweist sich wie in den anderen erwähnten ML basierten Methoden wegen des hohen Bedarfs an schnellen Speicherzugriffen als sehr schwierig. Mit dieser Implementierung wäre es deshalb nicht möglich, eine kosteneffiziente Datenverarbeitungsplattform aufzubauen.

Die Veröffentlichung von Ch. W. Lerche ET. AL. "Fast circuit topology for spatial signal distribution analysis", 17th REAL-TIME CONFERENCE - IEEE-NPSS TECHNICAL COMMITTEE ON COMPUTER APPLICATIONS IN NUCLEAR AND PLASMA SCIENCE; 2010, PISCATAWAY, NJ, USA, 1. Januar 2010 (2010-01-01), Seiten 1-8, DOI: 10.1109/RTC.2010.5750391 offenbart ein Verfahren zur Positions- und Energiebestimmung in Szintillationsdetektoren bei dem die Photokonversionsenergie und die Photokonversionsposition von Teilchen, welche Szintillationsereignisse auslösen, aus der von einem Fotodetektor abgetasteten Verteilung des freigesetzten Szintillationslichts von einem Szintillationsereignis oder mehreren Szintillationsereignissen in einem iterationsfreien Verfahren bestimmt wird.

Es ist die Aufgabe der Erfindung, die Nachteile des Standes der Technik zu überwinden. Insbesondere soll eine genaue und schnelle Methode zur Positions- und Energiebestimmung in Szintillationsdetektoren für die medizinische und molekulare Bildgebung ermöglicht werden, um PET Kameras, SPECT Kameras oder Compton Kameras und Szintigraphiekameras mit hoher Ortsauflösung, geringer Totzeit und vertretbaren Hardwareleistungsanforderungen an die Datenverarbeitungseinheit zu ermöglichen. Das Verfahren soll tolerant gegenüber fehlenden Daten und gegenüber der bei Szintillationsdetektoren typischerweise auftretenden Poissonfluktuationen im Signal sein. Hierbei bedeutet tolerant, dass der Positionierfehler aufgrund der fehlenden Daten so gering ist, dass er nicht zu Artefakten oder erhöhtem Bildrauschen im aus den Daten rekonstruierten Bild führt. Das Verfahren soll berücksichtigen, dass die Detektion von Fotonen ein Poissonprozess ist, weshalb die Signale $q_{i_x,i_y}$ einer Poissonstatistik folgen und der statistische Messfehler von $q_{i_x,i_y}$ proportional zu $\sqrt{q_{i_x,i_y}}$ ist. Die Implementierung des Verfahrens in CPUs oder FPGAs soll so ressourcenschonend sein, dass sämtliche in einer PET, SPECT oder Szintigraphieuntersuchung detektierten Szintillationsereignisse mit nur wenigen CPUs und/oder FPGAs in Echtzeit noch während der Datenakquise positioniert werden können. Bei geringen Lichtmengen sollen sich große statistische Unsicherheiten für einzelne Fotodetektorpixel nicht auf die Präzession der Positions- und Energiewerte auswirken. Eine Anhebung des Schwellenwertes der einzelnen Fotodetektorpixel soll keine Verminderung der Präzession der Positions- und Energiewerte zur Folge haben. Messfehler und Falschpositionierungen von eintretenden Teilchen sollen verringert werden. Produktionstoleranzen bei der Produktion von Sensoren sollen zu geringeren Ungenauigkeiten bei der Positions- und Energiewertbestimmung führen. Eine nachträgliche Korrektur der Energie und der Position wie im Anger-Verfahren ($\langle E \rangle_{Anger}$ und $(\langle X \rangle_{Anger} \langle Y \rangle)_{Anger})$) soll nicht mehr erforderlich sein. Rechenzeiten für die Bestimmung der Energie und der Position sollen minimiert werden und die Energie und die Position sollen mit einem iterationsfreiem Verfahren bestimmt werden.

Ausgehend vom Oberbegriff des Anspruchs 1 wird die Aufgabe erfindungsgemäß gelöst mit den Merkmalen des kennzeichnenden Teils des Anspruchs 1.

Mit dem erfindungsgemäßen Verfahren werden die Nachteile des Standes der Technik überwunden. Insbesondere wird eine genaue und schnelle Methode zur Positions- und Energiebestimmung in Szintillationsdetektoren für die medizinische und molekulare Bildgebung zur Verfügung gestellt, um PET Kameras, SPECT Kameras oder Compton Kameras und Sziritigraphiekameras mit hoher Ortsauflösung, geringer Totzeit und vertretbaren Hardwareleistungsanforderungen an die Datenverarbeitungseinheit zur Verfügung zu stellen. Das Verfahren ist tolerant gegenüber fehlenden Daten und gegenüber der bei Szintillationsdetektoren typischerweise auftretenden Poissonfluktuationen im Signal. Das Verfahren berücksichtigt, dass die Detektion von Fotonen ein Poissonprozess ist, weshalb die Signale $q_{i_x,i_y}$ einer Poissonstatistik folgen, und der statistische Messfehler von $q_{i_x,i_y}$ proportional zu $\sqrt{q_{i_x,i_y}}$ ist. Das Verfahren ermöglicht die Implementierung in CPUs oder FPGAs, welche so ressourcenschonend ist, dass sämtliche in einer PET, SPECT oder Szintigraphieuntersuchung detektierten Szintillationsereignisse mit nur wenigen CPUs und/oder FPGAs in Echtzeit noch während der Datenakquise positioniert werden können. Bei geringen Lichtmengen wird verhindert, dass sich große statistische Unsicherheiten für einzelne Fotodetektorpixel auf die Präzession der Positions- und Energiewerte auswirken. Höhere Schwellenwerte der einzelnen Fotodetektorpixel sind realisierbar, ohne dass dies zu einer Verminderung der Präzession der Positions- und Energiewerte führt. Messfehler und Falschpositionierungen von eintretenden Teilchen, welche Szintillationsereignisse auslösen können, werden verringert. Teilchen, welche Szintillationsereignisse auslösen können, sind beispielsweise Gamma- oder Röntgenphotonen, $\alpha$- Teilchen oder $\beta$-Teilchen. Grundsätzlich können es Elementarteilchen, wie Leptonen oder Gamma- oder Röntgenphotonen sein, oder aus Elementarteilchen zusammengesetzte Teilchen sein, wie Mesonen, Baryonen oder Ionen. Diese werden im Folgenden als Teilchen bezeichnet. Produktionstoleranzen bei der Produktion von Sensoren führen zu geringeren Ungenauigkeiten bei der Positions- und Energiewertbestimmung. Eine zusätzliche Korrektur der Energie wird nicht benötigt. Rechenzeiten für die Auswertung der Messergebnisse werden minimiert. Die Energie und die Position werden mit einem iterationsfreien Verfahren bestimmt.

Vorteilhafte Weiterbildungen der Erfindung sind in den Unteransprüchen angegeben.

In Folgenden wir die Erfindung in ihrer allgemeinen Form beschrieben, ohne dass dies einschränkend auszulegen ist.

Erfindungsgemäß wird ein Verfahren zur Positions- und Energiebestimmung in Szintillationsdetektoren zur Verfügung gestellt, bei dem ein iterationsfreier Algorithmus zur Bestimmung der Energie und Position des Szintillationsereignisses nach den Gleichungen (6), (7) und (8) bestimmt wird. Ein Szintillationsereignis kann erfindungsgemäß durch Teilchen, welche Szintillationsereignisse auslösen können, beispielsweise Gammafotonen, Röntgenphotonen, $\alpha$-Teilchen oder $\beta$-Teilchen ausgelöst werden. Grundsätzlich können es Elementarteilchen, wie Leptonen oder Photonen sein, oder aus Elementarteilchen zusammengesetzte Teilchen sein, wie Mesonen, Baryonen oder Ionen.

$$\tilde{\mathcal{L}}\left(m_j\middle|\{q_{n_1},\cdots,q_{n_t}\}\right) = \sum_{i=1}^{t} \widetilde{log_2}\left(\mu_{m_j,n_i}\right) \cdot q_{n_i} - \max(q_{n_i}) \cdot \sum_{i=1}^{t} \mu_{m_j,n_i} \qquad (6)$$

$$m_{ML} = \underset{m_j\in\{m_1,\cdots,m_p\}}{\mathrm{argmax}} \tilde{\mathcal{L}}\left(m_j\middle|\{q_{n_1},\cdots,q_{n_t}\}\right) \qquad (7)$$

$$E_{ML} = norm_{m_{ML}} \sum_{i=1}^{t} q_{n_i} \bigg/ \sum_{i=1}^{t} \mu_{m_{ML},n_i} \qquad (8)$$

In den Gleichungen (6) - (8) bedeuten: $\tilde{\mathcal{L}}$

: log-Likelyhood für die Signale $\{q_{n_1},\cdots,q_{n_t}\}$ und ein Szintillationsereignis im Kristall mit dem Index $m_j$

$n_i \in \{n_1,\cdots,n_t\}$: Indizes der Fotodetektorpixel für welche $q_{n_i} > q_{th}$ und t $\leq$ N gilt. $q_{th}$ bezeichnet den für die Fotodetektorpixel eingestellten Schwellenwert und t die Anzahl der Fotodetektorpixel mit einem Signal oberhalb des Schwellenwerts $q_{th}$.

$m_j \in (m_1,\cdots,m_p\}$: Indizes der Szintillatorsegmente, welche für die Berechnung berücksichtigt werden.

$m_{ML}$ : Index des Szintillatorsegments, in welchem die Szintillation am wahrscheinlichsten stattgefunden hat.

$q_{n_i}$: Signale von dem Fotodetektorarray für die Fotodetektorpixel $n_i$.

$E_{ML}$: Wahrscheinlichste Gesamtenergie des Szintillationsereignisses nach Bestimmung durch ML Algorithmus.

$\widetilde{log_2}$ : Näherung für den Logarithmus zur Basis 2

$norm_{m_{ML}}$: Kalibrationsfaktor zur korrekten Berechnung der Energie für Szintillatorsegment $m_{ML}$.

$\mu_{m_j,n_i}$: Wahrscheinlichkeiten, dass ein Szintillationsfoton, welches in Szintillatorsegment $m_j$ emittiert wird, im Fotodetektorpixel $n_i$ detektiert wird.

$\mu_{m_{ML},n_i}$: Wie $\mu_{m_j,n_i}$, jedoch für $m_j = m_{ML}$;

Die Photokonversionsenergie und Photokonversionsposition von Teilchen, welche Szintillationsereignisse auslösen, werden aus der von einem Fotodetektor abgetasteten Verteilung des freigesetzten Szintillationslichts von einem Szintillationsereignis oder mehreren Szintillationsereignissen in einem iterationsfreien Verfahren nach den Formeln (6), (7) und (8) berechnet.

Der erfindungsgemäß eingesetzte Algorithmus nach den Gleichungen (6) bis (8) kommt ohne Iteration aus, was die Rechenzeit verringert und zu hohen Verarbeitungsraten der Daten führt. Die den Szintillationssignalen zugrundeliegende Poissonstatistik wird berücksichtigt und die Position der Fotodetektorpixel in der xy-Ebene kann beliebig gewählt werden und muss nicht auf einem kartesischen Gitter liegen. Das Verfahren ist robust gegenüber unvollständigen Daten, weshalb Fotodetektorpixel ohne Signal kein Problem darstellen und somit eine genügend kleine Szintillationsdetektortotzeit bei gleichzeitig hoher Präzession der bestimmten Energie- und Positionswerte der Szintillationsereignisse erreicht werden kann.

In Gleichungen (6) - (8) bezeichnen $m_{ML}$ den Index des Szintillatorsegments, in welchem die Szintillation am wahrscheinlichsten stattgefunden hat, $E_{ML}$ die wahrscheinlichste Gesamtenergie des Szintillationsereignisses, $q_{n_i}$ die Signale von dem Fotodetektorarray, wobei nur für $\{n_1, \cdots, n_t\}$ Fotodetektorpixel Signale mit $q_{n_i} > q_{th}$ vorliegen und $t \leq N$ gilt. Dabei kann $t$ für jedes Szintillationsereignis unterschiedlich groß sein und die Größe von t durch die Einstellung des Schwellenwerts für die Fotodetektorpixel beeinflusst werden. Kleine Werte von $t$ zwischen 5 und 20 sind bei einer Fotodetektorpixelgröße von $(3 - 5\,\text{mm})^2$ und eine Szintillatorsegmentgröße von $(1 - 3\,\text{mm})^2$ für eine schnelle Berechnung gemäß Gleichungen (6) - (8) vorteilhaft. Da die Ordnung der Fotodetektorpixelindizes für die Berechnung mit ML-basierten Methoden irrelevant ist, muss die Nummerierung der Fotodetektorpixel nicht deren geometrische Anordnung wiederspiegeln. Die Fotodetektorpixel können für den Algorithmus beliebig in der Ebene des Fotodetektorarray angeordnet sein, und insbesondere muss bei einer Kartesischen Anordnung nicht $N_x = N_y$ gelten. In Gleichungen (6) - (8) bezeichnen $m_j \in \{m_1, \cdots, m_p\}$ die Indizes der Szintillatorsegmente, welche für die Berechnung gemäß Gleichungen (6) - (8) berücksichtigt werden. In der Mehrzahl der Fälle findet das Szintillationsereignis vollständig in nur einem Szintillatorsegment, auch Szintillatorpixel genannt, statt. Je weiter dieses Szintillatorsegment von den Fotodetektorpixeln, für welche ein Signal $q_{n_i} > 0$ detektiert wurde, entfernt ist, desto unwahrscheinlicher emittiert dieses Szintillatorsegment das Szintillationslicht. Infolgedessen kann eine Rangliste für die Szintillatorsegmente nach ihrer Entfernung $d$ vom Zentrum der Szintillationslichtverteilung in der x-y-Ebene erstellt und gespeichert werden. Das Zentrum der Szintillationslichtverteilung wird dabei durch die Position des Fotodetektorpixels mit maximalem Signal $q_{n_i}$ bestimmt. Diese Ranglisten können sogar vorab für jeden Fotodetektorpixel bestimmt und in einer Look-up-table (LUT) mit einer Größe von $N \cdot M_{rel} \cdot \lceil \log_2 M \rceil$ Bits gespeichert werden. Dabei bezeichnet $M_{rel}$ Anzahl der relevanten Szintillatorsegmente. Diese kann im Bereich $1 \leq M_{rel} \leq M$ frei gewählt werden. Größere Werte von $M_{rel}$ führen zu präziseren Ergebnissen aber längeren Bearbeitungszeiten. In Gleichungen (6) - (8) bezeichnet $\widetilde{\log_2}$ eine Näherung für den Logarithmus zur Basis 2. Die Näherung des Logarithmus kann zum Beispiel wie in (Gutierrez & Valls, 2010 [9]) erfolgen, wobei eine sehr geringe Genauigkeit mit einem mittleren relativen Fehler von 2 %, einem mittleren absoluten Fehler von 0.11 und eigenem maximalen absoluten Fehler von 0.17 ausreichend ist. In Gleichungen (6) - (8) bezeichnet $norm_{m_{ML}}$ einen Kalibrationsfaktor zur korrekten Berechnung der Energie und $\mu_{m_j, n_i}$ die Wahrscheinlichkeiten, dass ein Szintillationsfoton, welches in Szintillatorsegment $m_j$ emittiert wird, im Fotodetektorpixel $n_i$ detektiert wird.

Die Wahrscheinlichkeiten $\mu_{m,n}$ werden im Voraus durch Messung, Simulation oder Berechnung bestimmt und in einer Look-up-table (LUT, auf Deutsch Wertetabelle) mit einer Größe von $M \cdot N \cdot P$ Bit gespeichert werden. P bezeichnet die erforderliche Präzession der Wahrscheinlichkeitswerte, M die Gesamtzahl des im Szintillationsdetektor verwendeten Szintillatorsegmente und N die Gesamtzahl des im Szintillationsdetektor verwendeten Fotodetektorpixel. P hängt vom Detektortyp ab und sollte größer als 8 Bit sein. Die Kalibrationsfaktoren $norm_m$ müssen im Voraus durch Messung, Simulation oder Berechnung bestimmt werden und in einer Look-up-table (LUT) mit einer Größe von $M \cdot P$ Bit gespeichert werden. $\mu_{m,n}$ und $norm_m$ können dabei wie folgt aus der gemessenen, über mehrere Szintillationsereignisse gemittelten Lichtverteilungen $\hat{I}_{m,n}$ gemäß Gleichungen (9) und (10) bestimmt werden. Hierbei ist $\hat{I}_{m,n}$ die mittlere Lichtintensität für den Fotodetektorpixel n, wenn die Szintillation im Szintillatorsegment $m$ stattfindet.

$$\mu_{m,n} = \hat{I}_{m,n} \Big/ \sum_{n=1}^{N} \hat{I}_{m,n} \qquad (9)$$

$$norm_m = \sum_{n=1}^{N} \hat{I}_{m,n} \Big/ \max(\hat{I}_{m,n}) \qquad (10)$$

In den Gleichungen (9) und (10) bedeuten:

$N = N_x \cdot N_y$: Gesamtzahl der Fotodetektorpixel im Szintillationsdetektor, wobei $N_x$ die Anzahl der Fotodetektorpixeln in x-Richtung und $N_y$ die Anzahl der Fotodetektorpixeln in y-Richtung sind.

$norm_m$: Kalibrationsfaktoren zur korrekten Berechnung der Energie.

$\hat{I}_{m,n}$: mittlere Lichtintensität für den Fotodetektorpixel n, wenn die Szintillation im Szintillatorsegment m stattfindet.

Die benötigten LUTs können in externen Dynamic Random Access Memory (DRAM), Synchronous Random Access Memory (SRAM), Quad Data Rate (QDR), SRAM oder Speicherbausteinen mit vergleichbarerer Performance gespeichert werden.

Zur vollständigen Bestimmung von $E_{ML}$ und $m_{ML}$ ausgehend von einer Menge von $t$ Signalen $\{q_{n_1}, \cdots, q_{n_t}\}$ von einem Szintillationsdetektor mit $M$ Szintillatorsegmenten und einem Fotodetektorarray mit $N$ Fotodetektorpixeln, wobei für die Signale $[q_{n_1}, \cdots, q_{n_t}]$ gilt: $q_{n_i} > 0 \ \forall \ i \in 1, \ldots, t \leq N$, sind folgende Rechenschritte erforderlich:

1. Identifizieren des Fotodetektorpixelindexes $n_{max}$ mit dem maximalen Signal $q_{n_{max}}$. Gibt es mehrere Pixel mit maximalem Signal $q_{n_{max}}$ kann entweder nur einer gewählt werden oder mit beiden fortgefahren werden. Sowohl $n_{max}$ als auch $q_{n_{max}}$ werden in Registern der FPGAs oder CPUs zwischengespeichert.

2. Aus der LUT, in welcher die Szintillatorsegmentindizes absteigend nach ihrer Entfernung d von der Position des Fotodetektorpixels $n_{max}$ gespeichert sind werden die $1 \leq p \leq M$ relevantesten Szintillatorsegmentindizes $\{m_1, \cdots, m_p\}$ ausgelesen und in Speicherzellen der FPGAs oder CPUs zwischengespeichert.

3. Aus der LUT, in welcher die Detektionswahrscheinlichkeiten $\mu_{m,n}$ gespeichert sind, werden die $\{m_1, \cdots, m_p\} \times \{q_{n_1} \cdots, q_{n_t}\}$ relevanten Wahrscheinlichkeiten $\mu_{m_j,n_i}$ mit $i \in 1, \ldots, t$ und $j \in 1, \ldots, p$ ausgelesen und in Speicherzellen der FPGAs oder CPUs zwischengespeichert.

4. Die approximierten Logarithmen $\widetilde{log_2}\left(\mu_{m_j,n_i}\right)$ werden bestimmt, mit den $q_{n_i}$ und gemäß Gleichung (6) aufsummiert und in Speicherzellen der FPGAs oder CPUs zwischengespeichert.

5. Die Wahrscheinlichkeiten $\mu_{m_j,n_i}$ werden gemäß Gleichung (6) aufsummiert und die Summe mit $\max(q_{n_i})$ multipliziert und in Speicherzellen der FPGAs oder CPUs zwischengespeichert.

6. Der Szintillatorsegmentindex $m_{ML}$, für welches die Summe $\sum_{i=1}^{t} \widetilde{log_2}\left(\mu_{m_j,n_i}\right)$ $q_{n_i} - \max(q_{n_i}) \cdot \sum_{i=1}^{t} \mu_{m_j,n_i}$ am größten ist, wird identifiziert und in einer Speicherzelle der FPGAs oder CPUs zwischengespeichert.

7. Die Wahrscheinlichkeiten $\mu_{m_{ML},n_i}$ werden gemäß Gleichung (8) summiert und das Ergebnis in einer Speicherzelle der FPGAs oder CPUs zwischengespeichert.

8. Aus der LUT, in welcher die Kalibrationsfaktoren $norm_m$ zur korrekten Berechnung der Energie gespeichert sind, wird $norm_{m_{ML}}$ ausgelesen und mit der Summe der Fotodetektorpixelsignale $\sum_{i=1}^{t} q_{n_i}$ multipliziert und durch die Summe der Wahrscheinlichkeiten $\mu_{m_{ML},n_i}$ dividiert. Bei Implementierungen in FPGAs ist es sinnvoll, die Division in den Bildrekonstruktionsrechner auszulagern, da Divisionen in FPGAs viele Ressourcen benötigen. Die zusätzliche Datenmenge zur Übertragung vom Dividenden und Divisor statt nur dem Quotienten ist vernachlässigbar.

Die Berechnung nach Schritten 1 - 8 ist nicht iterativ. Divisionen sind nicht unbedingt erforderlich und Multiplikationen sind minimiert. Der erforderliche Speicherplatz mit sehr schnellem Zugriff (z.B. Cache in CPU, Flip-Flops, UltaRAM, BRAM, oder vergleichbare in FPGAs) ist erfindungsgemäß soweit minimiert, dass alle erforderlichen Daten in Handelsüblichen FPGAs und CPUs Platz finden. Darüber hinaus wird der erforderliche Datentransfer von Daten, welche nicht in CPU Cache oder in FPGA FlipFlops oder in FPGA, BRAM oder in FPGA UltaRAM untergebracht werden kann, minimiert. Für die Berechnung des Logarithmus kann eine sehr schnelle, angenäherte Implementierung gewählt werden, da keine hohe Präzision für die Schätzung von $E_{ML}$ und $m_{ML}$ erforderlich ist. Die Berechnung nach Schritten 1 - 8 ist wesentlich robuster und Präziser als die Implementierung der Anger Methode (Gleichungen (1) - (3)). Die Berechnung nach Schritten 1 - 8 ist wesentlich schneller im Vergleich zu allen zitierten, alternativen ML basierten Methoden. Insbesondere ist mit High-End CPUs nach Stand der Technik die Durchführung der Schritte 1 - 8 für 5 Millionen Szintillationsereignis in einer Sekunde möglich, weshalb für die zuvor genannten $80 \times 10^6$ Singelszintillationsereignisse nur 16 Threads notwendig sind. Bei einer FPGA Implementierung der Rechenschritte 1 - 8, ist eine Verarbeitung der $80 \times 10^6$ Singelszintillationsereignisse mit nur 4 High-End FPGAs möglich.

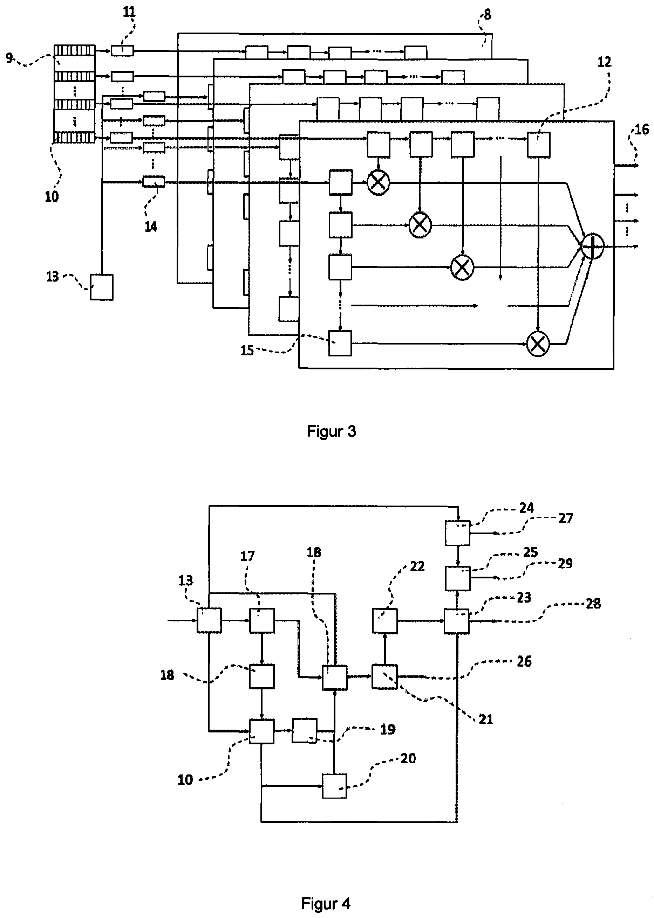

Die Formulierung des ML basierten Algorithmus erlaubt insbesondere eine effektive Nutzung der Parallelisierungsmöglichkeiten in CPUs (Duplizierung) und der Parallelisierungsmöglichkeiten in FPGAs (Duplizierung und Pipelining), wie in Figur 3 Beschrieben. Eine Parallelisierung der Multiplikationen und der Berechnung der $\widetilde{log_2}\left(\mu_{m_j,n_i}\right)$ ist von elementarer Wichtigkeit für eine genügend schnelle und genaue Berechnung.

Der beschriebene ML basierte Algorithmus kann auch mit kontinuierlichen Szintillatoren verwendet werden indem man das dreidimensionale, kontinuierliche Szintillatorvolumen in eine endliche Anzahl von Teilvolumen unterteilt (quantisiert). Sei das dreidimensionale, kontinuierliche Szintillatorvolumen zum Beispiel durch die Dimensionen $H \times B \times T$ gegeben, so kann die Höhe in $M_H$ Intervalle der Länge $H/M_H$, die Breite in $M_B$ Intervalle der Länge $B/M_B$ und die Tiefe in

$M_T$ Intervalle der Länge $T/M_T$ unterteilt werden. Diese dreidimensionalen Intervalle werden dann wie individuelle Szintillationssegmente behandelt. Die Berechnung erfolgt identisch zur Berechnung für tatsächlich segmentierte Szintillatoren.

Die Figuren zeigen Detektoren und Einheiten zur Bestimmung der Energie und Position von Teilchen in Szintillationsdetektoren in schematischer Form:

Es zeigt:

Fig. 1: Einen Szintillationsdetektor
Fig. 2: Eine Signalentstehung in einem Szintillationsdetektor
Fig. 3: Eine parallelisierte Einheit zur Berechnung der approximierten Logarithmen und zur Multiplikation
Fig. 4: Einheit zur Bestimmung des ML Schätzwertes für die Energie und Position des Szintillationsereignisses
Fig. 5: Einheit zur Bestimmung des ML Schätzwertes für die Energie und Position bei gleichzeitiger Verwendung von FPGAs und CPUs
Fig. 6: Einheit zur Bestimmung des ML Schätzwertes für die Energie und Position bei Verwendung von CPUs

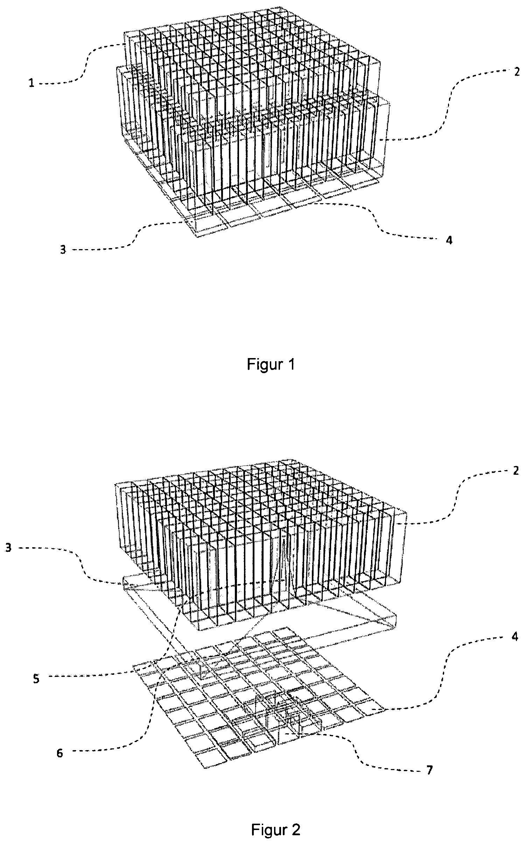

Figur 1 zeigt einen typischen Aufbau eines Szintillationsdetektors mit mehreren Lagen von segmentierten Szintillatoren (1), (2). Es sind 1 bis 4 Lagen von segmentierten Szintillatoren möglich. Die unterste Lage der segmentierten Szintillatoren (2) wird über ein Lichtleiter (3), der in diesem einfachen Fall aus einer für das Szintillationslicht transparenten, planparallelen Materialschicht besteht, an das Fotodetektorarray (4) gekoppelt. Dabei kann das Fotodetektorarray ein PSMPT, ein MCP, ein SiPM array oder ein APD array sein. Typische Dicken des Lichtleiters sind je nach Detektorgröße und Granularität des Szintillators und des Fotodetektorarrays 0.1 mm - 2cm.

In Figur 2 haben gleiche Vorrichtungsbestandteile dieselben Bezugszeichen, wie in den vorhergehenden Figuren. In ihr ist die Darstellung eines einlagigen segmentierten Szintillators abgebildet. Die Funktionsweise von mehrlagigen Szintillationsdetektoren zur dreidimensionalen Fotokonversionspositionsbestimmung für die Messung der Tiefenwechselwirkung (engl. Depth of Interaction) mit mehrlagigen segmentierten Szintillatoren ist analog. Das Szintillationslicht (5) aus einem einzelnen Szintillatorsegmente wird über den Lichtleiter (3) über die gesamte sensitive Fläche des Fotodetektorarrays (4) verteilt (6). Je nach Schwellenwerteinstellung $q_{th}$ der Fotodetektorpixel des Fotodetektorarrays (4), wird dann eine Integration ausgelöst und die Signale $q_{i_x,i_y} > q_{th}$ (7) werden vom Fotodetektor oder der nachgeschalteten Elektronik zur Verfügung gestellt. Signale mit $q_{i_x,i_y} < q_{th}$ werden nicht zur Berechnung der Energie und Position verwendet.

Figur 3 zeigt eine kombinierte, parallelisierte Multiplikationseinheit bestehend aus mehreren einzelnen Multiplikationseinheiten im Pipelinebetrieb (8). In der Speichereinheit (9), z.B. QDR, DRAM, SRAM, etc., werden die Detektionswahrscheinlichkeiten $\mu_{m,n}$ permanent gespeichert. Dabei gibt in dieser Darstellung die Spaltenadresse einer einzelnen Detektionswahrscheinlichkeit $\mu_{m,n}$ den Index n des Fotodetektorpixels an und die Zeilenadresse den Index m des Szintillationssegments an. Implementierungen mit hiervon abweichenden Zuordnungen sind auch möglich. Die relevanten Detektionswahrscheinlichkeiten $\mu_{m_j,n_i}$ werden in Zwischenspeichern (11) abgelegt (z.B. UltaRAM, BRAM, FlipFlops, Cache, etc.) und in eine Einheit (12) zur Speicherung und Berechnung des $\widetilde{log_2}\left(\mu_{m_j,n_i}\right)$ gegeben. Die Fotodetektorpixelsignale werden über eine Datenschnittschnelle (13) eingelesen und es werden p Kopien von den $t$ Signalen $\{q_{n_1},\cdots,q_{n_t}\}$ in Zwischenspeichern (14) abgelegt, wobei eine Speichereinheit (15) genau einen Signalwert enthält. An den Ausgängen (16) können die Werte für $\sum_{i=1}^{t} \widetilde{log_2}\left(\mu_{m_j,n_i}\right) \cdot q_{n_i}$ ausgelesen werden.

In Figur 4 haben gleiche Vorrichtungsbestandteile dieselben Bezugszeichen, wie in den vorhergehenden Figuren. Sie zeigt eine Bestimmung des ML Schätzwertes für die Energie und Position des Szintillationsereignisses. (13) bezeichnet eine Datenschnittschnelle, über welche die t Signale $\{q_{n_1},\cdots,q_{n_t}\}$ entgegengenommen werden. (17) ist eine Einheit zur Bestimmung des Fotodetektorpixelindexes $n_i$ mit dem maximalen Fotodetektorpixelwert $q_{n_i}$ und des maximalen Fotodetektorpixelwert $q_{n_i}$. Mit (20) wird eine Speichereinheit, z.B. QDR, DRAM, SRAM, zum permanenten Speichern der Indizes der p relevantesten Szintillatorsegmentindizes $\{m_1,\cdots,m_p\}$ für den Fotodetektorpixelindex $n_i$ bezeichnet. Das Bezugszeichen (19) bezeichnet eine optionale Einheit zur Bestimmung der $\widetilde{log_2}\left(\mu_{m_j,n_i}\right)$ Werte, falls die $\widetilde{log_2}\left(\mu_{m_j,n_i}\right)$ Werte nicht in einer kombinierten, parallelisierten Einheit gemäß Figur 3 bestimmt werden (20):

Einheit zur Bestimmung der Summen $\sum_{i=1}^{t} \mu_{m_j,n_i}$ (18) ist eine kombinierte parallelisierte Multiplikationseinheit, wie dargestellt in Figur 3 zur Berechnung der Gleichung (6). (21) ist eine Einheit zur Bestimmung des Szintillatorsegmentindexes $m_{ML}$ mit größter Likelihood. Sollten mehrere Szintillatorsegmente die gleiche Likelihood haben, wird einer der Szintillatorsegmentindizes mit größter Likelihood ausgewählt. (22) bezeichnet eine Speichereinheit, z.B. QDR, DRAM, SRAM, zum permanenten Speichern der Kalibrationsfaktoren $norm_m$. (23) ist eine Einheit zur Berechnung der Summe der Wahrscheinlichkeiten $\mu_{m_{ML},n_i}$. (24) ist eine Einheit zur Berechnung der Summe der Fotodetektorpixelwerte $q_{n_i}$. (25) stellt eine Einheit zur Berechnung des Quotienten aus der Summe der Fotodetektorpixelwerte $q_{n_i}$ und der Summe der Wahrscheinlichkeiten $\mu_{m_{ML},n_i}$ dar. (26) ist eine Ausgabe des Szintillatorsegmentindexes $m_{ML}$ mit größter Likelihood. (29) ist eine Ausgabe der wahrscheinlichsten Energie $E_{ML}$. Alternativ können auch die Summe der Wahrscheinlichkeiten $\mu_{m_{ML},n_i}$ über den Ausgang (28) und die Summe der Fotodetektorpixelwerte $q_{n_i}$ über den Ausgang (27) ausgegeben werden und die Division (25) in eine nachgeschaltete CPU verlegt werden (bei FPGA basierter Implementierung).

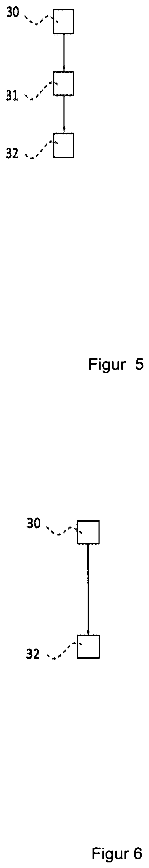

Figur 5 zeigt die Implementierung der Bestimmung des ML Schätzwertes für die Energie und Position des Szintillationsereignisses aus dem Szintillationsdetektor (30) bei gleichzeitiger Verwendung einer FPGA Einheit (31) und einer CPU Einheit (32). Die CPU Einheit (32) ist erforderlich für weitere Berechnungen, wie die Konzidenzsuche und die Bildrekonstruktion.

Figur 6 zeigt die Implementierung des ML-Schätzwertes für die Energie und Position des Szintillationserzeugnisses aus dem Szintillationsdetektor (30) bei ausschließlicher Verwendung einer CPU Einheit (32). Die CPU Einheit (32) ist erforderlich für weitere Berechnungen, wie die Koinzidenzsuche und die Bildrekonstruktion.

Die Erfindung kann beispielsweise für einen Szintillationsdetektor für PET oder SPECT oder Szintigraphie oder Compton Kameras, bestehend aus einem einlagigen, segmentierten Szintillator, einem Licht¬leiter und einem Fotodetektorarray (PSPMT, MCP, APD array, SiPM array) und einer Elektronik mit FPGA und Speicher, wobei in der FPGA die Rechenschritte 1 - 8 und die Multiplikationseinheit wie in Figuren 3 und 4 implementiert sind, verwendet werden.

Ebenso ist die Verwendung in einem Szintillationsdetektor für PET oder SPECT oder Szintigraphie oder Compton Kameras, bestehend aus einem mehrlagigen, segmentierten Szintillator, einem Licht¬leiter und einem Fotodetektorarray (PSPMT, MCP, APD array, SiPM array) und einer Elektronik mit FPGA und Speicher, wobei in der FPGA die Rechenschritte 1-8 und die Multiplikationseinheit wie in Figuren 3 und 4 implementiert sind möglich.

Weiterhin kann die Erfindung in einem Szintillationsdetektor für PET oder SPECT oder Szintigraphie oder Compton Kameras, bestehend aus einem einlagigen, kontinuierlichen Szintillator und einem Fotodetektorarray (PSPMT, MCP, APD array, SiPM array) und einer Elektronik mit FPGA und Speicher, wobei in der FPGA die Rechenschritte 1 - 8 und die Multiplika¬tionseinheit wie in Figur 3 implementiert sind, eingesetzt werden.

Eine weitere Anwendung der Erfindung ist in einem Szintillationsdetektor für PET oder SPECT oder Szintigraphie oder Compton Kameras, bestehend aus einem einlagigen, kontinuierlichen Szintillator, einem Licht¬leiter und einem Fotodetektorarray (PSPMT, MCP, APD array, SiPM array) und einer Elektronik mit FPGA und Speicher, wobei in der FPGA die Rechenschritte 1 - 8 und die Multiplikationseinheit wie in Figuren 3 und 4 implementiert sind möglich.

In den vier letztgenannten Anwendungen ist die Anwendung der Erfindung in einer Art möglich , bei der sämtliche Rechenschritte 1 - 8 in einer CPU und nicht in einer FPGA implementiert sind.

In den fünf letztgenannten Anwendungen ist die Anwendung der Erfindung in einer Art möglich, wobei an mehr als einer Seite des Szintillators Fotodetektorarrays angebracht sind. Bei segmentierten Szintillatoren können die obere und die untere Seite bei einer Orientierung wie in Figuren 1 und 2 zum Aus¬lesen des Szintillationslichtes mit Fotodetektoren verwendet werden. Bei kontinuier¬lichen Szintillatoren können alle 6 Seiten zum Auslesen des Szintillationslichtes mit Fotodetektoren verwendet werden.

Beispiel:

Entscheidend für die Ermöglichung ausreichend hoher Verarbeitungsraten für die in einem typischen PET Scanner anfallenden Singleszintillationsereignisse und Koinzidenzszintillationsereignisse ist die Verwendung eines iterationsfreien Algorithmus, da dieser die effiziente Implementierung in FPGAs ermöglicht und die Nutzung der hierdurch gegebenen Möglichkeiten zu Parallelisierung (z.B. Verarbeitungspipelines und Duplikation der Verarbeitungsinstanzen) ermöglicht. Die Verwendung eines ML basierten Algorithmus ist vorzuziehen, da hierdurch die den Szintillationssignalen zugrundeliegende Poissonstatistik berücksichtigt wird und die Positionen der Fotodetektorpixel in der x-y Ebene beliebig gewählt werden können, und nicht wie bei der Anger Methode auf einem kartesischen Gitter liegen müssen.

Die Verwendung eines ML basierten Algorithmus ist auch vorzuziehen, da ML basierte Algorithmen robust gegenüber unvollständigen Daten sind, weshalb Fotodetektorpixel ohne Signal kein Problem darstellen und somit eine genügend kleine Szintillationsdetektortotzeit bei gleichzeitig hoher Präzession der bestimmten Energie- und Positionswerte der Szintillationsereignisse erreicht werden kann. Um geringe Totzeiten zu erreichen, ist es bei großen Szintillationsdetektoren darüber hinaus vorteilhaft, segmentierte Szintillatoren zu verwenden, da sich dann das Szintillationslicht nicht im gesamten Detektorvolumen ausbreiten kann und die Fotodetektorpixel mit Werten $q_{i_{x},i_{y}} > q_{th}$ in ihrer Zahl und im Ort in der x-z Ebene beschränkt sind. Dadurch können bei individueller Operation der Fotodetektorpixel auch mehrere unabhängige Szintillationsereignisse in einem Szintillationsdetektor ausgelesen werden. Hierdurch wird die Totzeit des gesamten Szintillationsdetektors erheblich verringert. Für einen Szintillationsdetektor bestehend aus einem Fotodetektorarray (PSPMT, SiPM array, APD array) mit $N = N_x \cdot N_y$ Fotodetektorpixeln und einem ein- oder mehrlagigen segmentierten Szintillator mit M = $\sum_l M_l$ Szintillatorsegmenten und $M_l = M_{l,x} \cdot M_{l,y}$ Szintillatorsegmenten in der Lage $l$ kann ein iterationsfreier ML basierte Algorithmus zur Bestimmung der Energie und Position des Szintillationsereignisses wie folgt angegeben werden:

$$\tilde{\mathcal{L}}\left(m_j \middle| \{q_{n_1}, \cdots, q_{n_t}\}\right) = \sum_{i=1}^{t} \widetilde{log_2}\left(\mu_{m_j,n_i}\right) \cdot q_{n_i} - \max(q_{n_i}) \cdot \sum_{i=1}^{t} \mu_{m_j,n_i} \qquad (6)$$

$$m_{ML} = \underset{m_j \in \{m_1, \cdots, m_p\}}{\operatorname{argmax}} \tilde{\mathcal{L}}\left(m_j \middle| \{q_{n_1}, \cdots, q_{n_t}\}\right) \qquad (7)$$

$$E_{ML} = norm_{m_{ML}} \sum_{i=1}^{t} q_{n_i} \bigg/ \sum_{i=1}^{t} \mu_{m_{ML},n_i} \qquad (8)$$

Hierbei bedeuten $M_{l,x}$ die Anzahl der Szintillatorsegmente in x-Richtung in der Lage $l$ und $M_{l,y}$ die Anzahl der Szintillatorsegmente in y-Richtung in der Lage $l$ sind. Bei einlagigen Szintillationsdetektoren (nur eine Lage an Szintillatorsegmenten) entfällt der Lagenindex $l$.

Zitierte Literatur:

[1] Chen-Yi, L. & Goertzen, A., 2013. Improved event positioning in a gamma ray detector using an iterative position-weighted centre-of-gravity algorithm. Physics in Medicine & Biology, 58(14), p. 189.
[2] Lerche, C. W. et al., 2016. Maximum likelihood positioning and energy correction for scintillation detectors. Physics in Medicine & Biology, 61(4), p. 1650.
[3] Schug, D. et al., 2015. Data Processing for a High Resolution Preclinical PET Detector Based on Philips DPC Digital SiPMs. IEEE TRANSACTIONS ON NUCLEAR SCIENCE, 62(3), p. 669.
[4] DeWitt, D. et al., 2010. Design of an FPGA-based algorithm for real-time solutions of statistics-based positioning. IEEE transactions on nuclear science, 57(1), pp. 71-77.
[5] Johnson-Williams, N. et al., 2010. Design of a Real Time FPGA-Based Three Dimensional Positioning Algorithm. IEEE Transactions on Nuclear Science, 58(1), pp. 26-33.
[6] Wang, Y. et al., 2016. An FPGA-Based Real-Time Maximum Likelihood 3D Position Estimation for a Continuous Crystal PET Detector. IEEE Transactions on Nuclear Science, 63(1), pp. 37-43.
[7] Schug, D. et al., 2016. Initial PET performance evaluation of a preclinical insert for PET/MRI with digital SiPM technology. Physics in Medicine & Biology, Volume 61, p. 2851-2878.
[8] Goldschmidt, B. et al., 2015. Software-based real-time acquisition and processing of PET detector raw data. IEEE transactions on biomedical engineering , 63(2), pp. 316-327.
[9] Gutierrez, R. & Valls, J., 2010. Low cost hardware implementation of logarithm approximation. IEEE Transactions on Very Large Scale Integration (VLSI) Systems, 19(12), pp. 2326-2330.

**Patentansprüche**

1. Verfahren zur Positions- und Energiebestimmung in Szintillationsdetektoren (30) , bei dem die Photokonversionsenergie und Photokonversionsposition von Teilchen, welche Szintillationsereignisse auslösen, aus der von einem Fotodetektor abgetasteten Verteilung des freigesetzten Szintillationslichts von einem Szintillationsereignis oder mehreren Szintillationsereignissen in einem iterationsfreien Verfahren berechnet wird, **dadurch gekennzeichnet, dass** die Photokonversionsenergie und Photokonversionsposition von Teilchen nach den Gleichungen (6), (7) und (8) berechnet wird,

$$\tilde{\mathcal{L}}\left(m_j \middle| \{q_{n_1}, \cdots, q_{n_t}\}\right) = \sum_{i=1}^{t} \widetilde{log_2}\left(\mu_{m_j,n_i}\right) \cdot q_{n_i} - \max\left(q_{n_i}\right) \cdot \sum_{i=1}^{t} \mu_{m_j,n_i} \qquad (6)$$

$$m_{ML} = \operatorname*{argmax}_{m_j \in \{m_1, \cdots, m_p\}} \tilde{\mathcal{L}}\big(m_j \big| \{q_{n_1}, \cdots, q_{n_t}\}\big) \tag{7}$$

$$E_{ML} = norm_{m_{ML}} \sum_{i=1}^{t} q_{n_i} \bigg/ \sum_{i=1}^{t} \mu_{m_{ML},n_i} \tag{8}$$

wobei

$\tilde{\mathcal{L}}$: log-Likelihood für die Signale $\{q_{n_1}, \cdots, q_{n_t}\}$ und ein Szintillationsereignis im Kristall mit dem Index $m_j$,

$N = N_x \cdot N_y$: Gesamtzahl der Fotodetektorpixel im Szintillationsdetektor, wobei $N_x$ die Anzahl der Fotodetektorpixeln in x-Richtung und $N_y$ die Anzahl der Fotodetektorpixeln in y-Richtung sind,

$n_i \in \{n_1, \cdots, n_t\}$: Indizes der Fotodetektorpixel für welche $q_{n_i} > q_{th}$ und $t \le N$ gilt. $q_{th}$ bezeichnet den für die Fotodetektorpixel eingestellten Schwellenwert und t die Anzahl der Fotodetektorpixel mit einem Signal oberhalb des Schwellenwerts $q_{th}$,

$n_{max}$: Fotodetektorpixelindexe mit dem maximalen Signal $q_{n_{max}}$.

$M = \sum_l M_l$: Gesamtzahl der Szintillatorsegmente im Szintillationsdetektor wobei $M_l = M_{l,x} \cdot M_{l,y}$ die Anzahl der Szintillatorsegmente in der Lage $l$ eines mehrlagigen Szintillationsdetektors ist, $M_{l,x}$ die Anzahl der Szintillatorsegmente in x-Richtung in der Lage $l$ und $M_{l,y}$ die Anzahl der Szintillatorsegmente in y-Richtung in der Lage $l$ sind. Bei einlagigen Szintillationsdetektoren (30) (nur eine Lage an Szintillatorsegmenten) entfällt der Lagenindex $l$,

$M_{rel}$: Anzahl der relevanten Szintillatorsegmente im Bereich $1 \le M_{rel} \le M$, die frei gewählt werden,

$m_j \in \{m_1, \cdots, m_p\}$: Indizes der relevanten Szintillatorsegmente, welche für die Berechnung gemäß Gleichungen (6), (7) und (8) berücksichtigt werden, wobei $1 \le p \le M_{rel}$ gilt,

$m_{ML}$: Index des Szintillatorsegments, in welchem die Szintillation am wahrscheinlichsten stattgefunden hat,

$q_{n_i}$: Signale von dem Fotodetektorarray (4) für die Fotodetektorpixel $n_i$,

$E_{ML}$: Wahrscheinlichste Gesamtenergie des Szintillationsereignisses nach Bestimmung durch den Algorithmus, nach den Gleichungen (6), (7) und (8)

$\widetilde{log_2}$ : Näherung für den Logarithmus zur Basis 2,

$norm_m$: Kalibrationsfaktoren zur korrekten Berechnung der Energie,

$norm_{m_{ML}}$: Kalibrationsfaktor zur korrekten Berechnung der Energie für Szintillatorsegment $m_{ML}$.

$\mu_{m_j,n_i}$: Wahrscheinlichkeiten, dass ein Szintillationsfoton, welches im Szintillatorsegment $m_j$ emittiert wird, im Fotodetektorpixel $n_i$ detektiert wird,

$\mu_{m_{ML},n_i}$: Wie $\mu_{m_j,n_i}$, jedoch für $m_j = m_{ML}$.

wobei dieser Algorithmus in ein FPGA (31) oder CPU (32) implementiert ist.

**2.** Verfahren nach Anspruch 1,
**dadurch gekennzeichnet,**
**dass** ein oder mehrere Fotodetektorpixelindizes $n_{max}$ des Fotodetektors mit dem maximale Signale identifiziert werden, und dass aus Wertetabellen, in welchen die Szintillatorsegmentindizes absteigend nach ihrer Entfernung d von der Position eines Fotodetektorpixels $n_{max}$ gespeichert sind, die $1 \le p \le M_{rel}$ relevantesten Szintillatorsegmentindizes $\{m_1, \cdots, m_p\}$ ausgelesen werden und in Speicherzellen von FPGAs (31) oder CPUs (32) zwischengespeichert und zur Berechnung der Log-Likelihood nach Gleichung (6) verwendet werden.

**3.** Verfahren nach Anspruch 2,
**dadurch gekennzeichnet,**
**dass** aus der Wertetabelle, in welcher die Detektionswahrscheinlichkeiten $\mu_{m,n}$ gespeichert sind, die $\{m_1, \cdots, m_p\} \times \{q_{n_1}, \cdots, q_{n_t}\}$ relevantesten Wahrscheinlichkeiten $\mu_{m_j,n_i}$ mit $i \in 1, ..., t$ und $j \in 1, ..., p$ ausgelesen werden und in Registern von FPGAs (31) oder CPUs (32) zwischengespeichert und zur Berechnung der Log-Likelihood nach Gleichung (6) verwendet werden.

**4.** Verfahren nach einem der Ansprüche 1 - 3
**dadurch gekennzeichnet,**

**dass** die approximierten Logarithmen $\widetilde{log_2}\big(\mu_{m_j,n_i}\big)$ bestimmt werden, in Speicherzellen von FPGAs (31) oder CPUs (32) zwischengespeichert werden, mit den $q_{n_i}$ multipliziert und gemäß Gleichung (6) aufsummiert werden.

5. Verfahren nach einem der Ansprüche 1 - 4
**dadurch gekennzeichnet,**
**dass** die Wahrscheinlichkeiten $\mu_{m_j,n_i}$ gemäß Gleichung (6) aufsummiert werden und die Summe mit max $(q_{n_i})$ multipliziert wird und die Ergebnisse in Speicherzellen von FPGAs (31) oder CPUs (32) zwischengespeichert werden.

6. Verfahren nach einem der Ansprüche 1 - 5
**dadurch gekennzeichnet,**

**dass** der Szintillatorsegmentindex $m_{ML}$, für welchen die Summe $\sum_{i=1}^{t} \widetilde{log_2}\left(\mu_{m_j,n_i}\right)$ . $q_{n_i} - \max(q_{n_i}) \cdot \sum_{i=1}^{t} \mu_{m_j,n_i}$ am größten ist, identifiziert und der Wert in Speicherzellen von der FPGAs (31) oder CPUs (32) zwischengespeichert wird.

7. Verfahren nach einem der Ansprüche 1 - 6
**dadurch gekennzeichnet,**
**dass** die Wahrscheinlichkeiten $\mu_{m_{ML},n_i}$ gemäß Gleichung (8) summiert und das Ergebnis in einer Speicherzelle von der FPGAs (31) oder CPUs (32) zwischengespeichert werden.

8. Verfahren nach einem der Ansprüche 1 - 7
**dadurch gekennzeichnet,**
**dass** aus einer Wertetabelle, in welcher die Kalibrationsfaktoren $norm_m$ zur korrekten Berechnung der Energie gespeichert sind, $norm_{m_{ML}}$ ausgelesen wird und mit der Summe der Fotodetektorpixelsignale $\sum_{i=1}^{t} q_{n_i}$ multipliziert und durch die Summe der Wahrscheinlichkeiten $\mu_{m_{ML},n_i}$ nach Gleichung (8) dividiert wird.

9. Verfahren nach Anspruch 8
**dadurch gekennzeichnet,**
**dass** im Falle von Implementierungen in FPGAs (31) die Division in einen Bildrekonstruktionsrechner ausgelagert wird.

10. Verfahren nach einem der Ansprüche 1 bis 9,
**dadurch gekennzeichnet,**
**dass** die Szintillationsereignisse von Teilchen, bestehend aus der Gruppe Gammafotonen, $\alpha$- Teilchen, $\beta$-Teilchen, Leptonen, Röntgenphotonen oder aus Elementarteilchen zusammengesetzte Teilchen, wie Mesonen, Baryonen oder Ionen ausgelöst werden.

**Claims**

1. A method for position and energy determination in scintillation detectors (30), in which the photoconversion energy and photoconversion position of particles triggering scintillation events are calculated from a distribution of the scintillation light released by a scintillation event or multiple scintillation events sampled by a photodetector in an iteration-free process,
**characterized in that**
the photoconversion energy and photoconversion position of particles are calculated according to equations (6), (7) and (8),

$$\tilde{L}\left(m_j \big| \{q_{n_1}, \cdots, q_{n_t}\}\right) = \sum_{i=1}^{t} \widetilde{log_2}\left(\mu_{m_j,n_i}\right) \cdot q_{n_i} - \max(q_{n_i}) \cdot \sum_{i=1}^{t} \mu_{m_j,n_i} \qquad (6)$$

$$m_{ML} = \underset{m_j \in \{m_1, \cdots, m_p\}}{\mathrm{argmax}} \tilde{L}\left(m_j \big| \{q_{n_1}, \cdots, q_{n_t}\}\right) \qquad (7)$$

$$E_{ML} = norm_{m_{ML}} \sum_{i=1}^{t} q_{n_i} \bigg/ \sum_{i=1}^{t} \mu_{m_{ML},n_i} \qquad (8)$$

wherein

$\tilde{L}$: log-likelihood for the signals $\{q_{n_1}, ..., q_{n_t}\}$ and a scintillation result in the crystal of the index $m_j$,

$N = N_x \cdot N_y$: total number of photodetector pixels in the scintillation detector, wherein $N_x$ is the number of photodetector pixels in the x-direction and $N_y$ is the number of photodetector pixels in the y-direction,

$n_i \in \{n_1, ..., n_t\}$: indices of the photodetector pixels for which $q_{n_i} > q_{th}$ and $t \le N$, $q_{th}$ denoting the threshold value set for the photodetector pixels, and t denoting the number of the photodetector pixels with a signal above the threshold value $q_{th}$,

$n_{max}$: photodetector pixel indices with the maximum signal $q_{n_{max}}$,

$M = \Sigma_l M_l$: total number of the scintillator segments in the scintillation detector, wherein $M_l = M_{l,x} \cdot M_{l,y}$ is the number of the scintillator segments in the location $l$ of a multi-layer scintillation detector, $M_{l,x}$ is the number of the scintillator segments in the x-direction in the location 1 and $M_{l,y}$ is the number of the scintillator segments in the y-direction in the location $l$, the location index 1 being omitted for single-layer scintillation detectors (30) (only one layer of scintillator segments),

$M_{rel}$: number of relevant scintillator segments in the range of $1 \le M_{rel} \le M$, which are selected freely,

$m_j \in \{m_1, ..., m_p\}$: indices of the relevant scintillator segments taken into account in the calculation according to equations (6), (7) and (8), wherein $1 \le p \le M_{rel}$,

$m_{ML}$: index of the scintillator segment in which the scintillation has likely occurred,

$q_{ni}$: signals from the photodetector array (4) for the photodetector pixel $n_i$,

$E_{ML}$: most probable total energy of the scintillation result upon determination by means of the algorithm according to equations (6), (7) and (8),

$\widetilde{log_2}$ : approximation for the logarithm to base 2,

$norm_m$: calibration factors for correct calculation of the energy,

$norm_{m_{ML}}$: calibration factor for correct calculation of the energy for scintillator segment $m_{ML}$,

$\mu_{m_j,n_i}$: probabilities that a scintillation photon emitted by scintillation segment $m_j$ is detected in the photodetector pixel $n_i$,

$\mu_{m_{ML},n_i}$: like $\mu_{m_j,n_i}$ but for $m_j = m_{ML}$,

wherein this algorithm is implemented in an FPGA (31) or CPU (32).

2. The method according to claim 1,
**characterized in that**
one or more photodetector pixel indices $n_{max}$ of the photodetector with the maximum signals are identified, and **in that** the $1 \le p \le M_{rel}$ most relevant scintillator segment indices $\{m_1, \cdots, m_p\}$ are read from value tables storing the scintillator segment indices in descending order based on their distance d from the position of a photodetector pixel $n_{max}$, and buffered in storage cells of FPGAs (31) or CPUs (32) and used for calculating the log-likelihood according to equation (6).

3. The method according to claim 2,
**characterized in that**
the $\{m_1, ..., m_p\} \times \{q_{n_1}, \cdots, q_{n_t}\}$ most relevant probabilities $\mu_{m_j,n_i}$ with $i \in 1, ..., t$ and $j \in 1, ..., p$ are read from the value table storing the detection probabilities $\mu_{m,n}$, and buffered in registers of FPGAs (31) or CPUs (32), and used for calculating the log-likelihood according to equation (6).

4. The method according to any one of claims 1 - 3,
**characterized in that**

the approximated logarithms $\widetilde{log_2}(\mu_{m_j,n_i})$ are determined, buffered in storage cells of FPGAs (31) or CPUs (32), multiplied with the $q_{n_i}$, and summed up according to equation (6).

5. The method according to any one of claims 1 - 4,
**characterized in that**
the probabilities $\mu_{m_j,n_i}$ according to equation (6) are summed up, and the sum is multiplied with max($q_{n_i}$), and the

results are buffered in storage cells of FPGAs (31) or CPUs (32).

6. The method according to any one of claims 1 - 5,
**characterized in that**
the scintillator segment index $m_{ML}$ for which the sum of

$$\sum_{i=1}^{t} \widetilde{log_2}(\mu_{m_j,n_i}) \cdot q_{n_i} - \max(q_{n_i}) \cdot \sum_{i=1}^{t} \mu_{m_j,n_i}$$ is greatest is identified, and the value is buffered in storage cells of FPGAs (31) or CPUs (32).

7. The method according to any one of claims 1 - 6,
**characterized in that**
the probabilities $\mu_{m_{ML},n_i}$ according to equation (6) are summed up, and the sum is buffered in storage cells of FPGAs (31) or CPUs (32).

8. The method according to any one of claims 1 - 7,
**characterized in that**
$norm_{m_{ML}}$ is read from a value table storing the calibration factors $norm_m$ for correct calculation of the energy, and multiplied with the sum of photodetector pixel signals $\sum_{i=1}^{t} q_{n_i}$, and divided by the sum of the probabilities $\mu_{m_{ML},n_i}$ according to equation (8).

9. The method according to claim 8,
**characterized in that**
in the case of implementations in FPGAs (31), the division is outsourced to an image reconstruction computer.

10. The method according to any one of claims 1 to 9,
**characterized in that**
the scintillation events are triggered by particles, consisting of the group of gamma photons, $\alpha$-particles, $\beta$-particles, leptons, X-ray photons or particles composed of elementary particles, such as mesons, baryons or ions.

**Revendications**

1. Procédé de détermination de position et d'énergie dans des détecteurs (30) à scintillation, dans lequel on calcule dans un procédé sans itération l'énergie de photoconversion et la position de photoconversion de particules, qui déclenchent des évènements de scintillation, à partir de la répartition, balayée par un photodétecteur, de la lumière de scintillation libérée par un évènement de scintillation ou par plusieurs évènements de scintillation,
**caractérisé**
**en ce que** l'on calcule l'énergie de photoconversion et la position de photoconversion de particules suivant les équations (6), (7) et (8),

$$\tilde{\mathcal{L}}\left(m_j \middle| \{q_{n_1}, \cdots, q_{n_t}\}\right) = \sum_{i=1}^{t} \widetilde{log_2}\left(\mu_{m_j,n_i}\right) \cdot q_{n_i} - \max(q_{n_i}) \cdot \sum_{i=1}^{t} \mu_{m_j,n_i} \qquad (6)$$

$$m_{ML} = \underset{m_j \in \{m_1, \cdots, m_p\}}{\mathrm{argmax}} \tilde{\mathcal{L}}\left(m_j \middle| \{q_{n_1}, \cdots, q_{n_t}\}\right) \qquad (7)$$

$$E_{ML} = norm_{m_{ML}} \sum_{i=1}^{t} q_{n_i} \Big/ \sum_{i=1}^{t} \mu_{m_{ML},n_i} \qquad (8)$$

dans lesquelles on a

$\tilde{\mathcal{L}}$: log-likelihood pour les signaux $\{q_{n_1}, \cdots, q_{n_t}\}$ et un évènement de scintillation dans le cristal ayant un indice $m_j$,
$N = N_x \cdot N_y$ : nombre total des pixels de photodétecteur dans le détecteur de scintillation, dans lequel $N_x$ est le nombre des pixels de photodétecteur dans une direction x et $N_y$ le nombre des pixels de photodétecteur dans une

direction y,

$n_i \in \{n_1, \cdots, n_t\}$ : indices des pixels de photodétecteur, pour lesquels on a $q_{n_i} > q_{th}$ et $t \leq N$. $q_{th}$ désigne la valeur de seuil réglée pour les pixels de photodétecteur et t le nombre des pixels de photodétecteur ayant un signal au-dessus de la valeur $q_{th}$ de seuil,

$n_{max}$ : indice de pixel de photodétecteur ayant le signal $q_{n_{max}}$ maximum.

$M = \Sigma_l M_l$ : nombre total des segments de scintillateur dans le détecteur de scintillation, dans lequel $M_l = M_{l,x} \cdot M_{l,y}$ *est* le nombre des segments de scintillateur dans la position 1 d'un détecteur à scintillation à plusieurs couches, $M_{l,x}$ est le nombre des segments de scintillateur dans la direction x dans la position 1 et $M_{l,y}$ le nombre des segments de scintillateur dans la direction y dans la position *l*. Pour des détecteurs à scintillation (30) à une seule couche (seule une couche de segments de scintillateur), on se dispense de l'indice 1 de couche,

$M_{rel}$ : nombre des segments de scintillateur pertinents dans la plage $1 \leq M_{rel} \leq M$, qui sont choisis librement,

$m_j \in \{m_1, \cdots, m_p\}$ : indices des segments de scintillateur pertinents, qui sont pris en compte pour le calcul, suivant les équations (6), (7) et (8), dans lequel on a $1 \leq p \leq M_{rel}$,

$m_{ML}$ : indice du segment de scintillateur, dans lequel la scintillation a eu lieu avec la plus grande probabilité.

$q_{n_i}$ : signaux du réseau (4) de photodétecteur pour les pixels $n_i$ de photodétecteur,

$E_{ML}$ : énergie totale la plus probable de l'évènement de scintillation après détermination par l'algorithme, suivant les équations (6), (7) et (8)

$\widetilde{log_2}$ : approximation pour le logarithme de base 2,

$norm_m$ : facteur d'étalonnage pour le calcul correct de l'énergie,

$norm_{m_{ML}}$ : facteur d'étalonnage pour le calcul correct de l'énergie pour le segment $m_{ML}$ du scintillateur.

$\mu_{m_j,n_i}$ : probabilités qu'un photon de scintillation, qui est émis dans le segment $m_j$ de scintillateur, soit détecté dans le pixel $n_i$ du photodétecteur,

$\mu_{m_{ML},n_i}$ : comme $\mu_{m_j,n_i}$, toutefois pour $m_j = m_{ML}$,

dans lequel cet algorithme est mis en œuvre dans un FPGA (31) ou une CPU (32).

2.  Procédé suivant la revendication 1,
    **caractérisé**
    **en ce que** l'on identifie par les signaux maximum un ou plusieurs indices $n_{max}$ de pixel de photodétecteur du photodétecteur, et **en ce que**, à partir de tables de valeurs, dans lesquelles les indices de segment de scintillateur sont mis en mémoire de manière décroissante suivant leur éloignement d de la position d'un pixel $n_{max}$ de photodétecteur, on lit les $1 \leq p \leq M_{rel}$, indices $\{m_1, \cdots, m_p\}$ de segment de scintillateur les plus pertinents et on les met en mémoire tampon dans des cellules de mémoire de FPGAs (31) ou de CPUs (32) et on les utilise pour le calcul du log-likelihood suivant l'équation (6).

3.  Procédé suivant la revendication 2,
    **caractérisé**
    **en ce que** l'on lit dans la table de valeurs, dans laquelle les probabilités $\mu_{m,n}$ de détection sont mises en mémoire, les $\{m_1, \cdots, m_p\} \times \{q_{n_1}, \cdots, q_{n_t}\}$ probabilités $\mu_{m_j,n_i}$ les plus pertinentes avec $i \in 1, \ldots, t$ et $j \in 1, \ldots, p$, et on les met en mémoire tampon dans des registres de FPGAs (31) ou de CPUs (32) et on les utilise pour le calcul du log-likelihood suivant l'équation (6).

4.  Procédé suivant l'une des revendications 1 à 3,
    **caractérisé**
    **en ce que** l'on détermine les logarithmes $\widetilde{log_2}\left(\mu_{m_j,n_i}\right)$ approximés, on les met en mémoire tampon dans des cellules de mémoire de FPGAs (31) ou de CPUs (32), on les multiplie par les $q_{n_i}$ et on les somme suivant l'équation (6).

5.  Procédé suivant l'une des revendications 1 à 4,
    **caractérisé**
    **en ce que** l'on somme les probabilités $\boldsymbol{\mu_{m_j,n_i}}$ suivant l'équation (6) et on multiplie la somme par max $\boldsymbol{(q_{n_i})}$ et on met en mémoire tampon les résultats dans les cellules de mémoire de FPGAs (31) ou de CPUs (32).

6.  Procédé suivant l'une des revendications 1 à 5,
    **caractérisé**
    **en ce que** l'on identifie l'indice $m_{ML}$ de segment de scintillateur, pour lequel la somme $\sum_{i=1}^{t} \widetilde{log_2}\left(\mu_{m_j,n_i}\right) \cdot q_{n_i} - \max(q_{n_i}) \cdot \sum_{i=1}^{t} \mu_{m_j,n_i}$ est la plus grande, et on met la valeur en mémoire tampon dans des cellules de mémoire des FPGAs (31) ou CPUs (32).

7.  Procédé suivant l'une des revendications 1 à 6,
    **caractérisé**
    **en ce que** l'on somme les probabilités $\mu_{m_{ML},n_i}$ suivant l'équation (8) et on met en mémoire tampon le résultat dans une cellule mémoire des FPGAs (31) ou CPUs (32).

8.  Procédé suivant l'une des revendications 1 à 7,
    **caractérisé**
    **en ce que** l'on lit $norm_{m_{ML}}$ dans une table de valeurs, dans laquelle les facteurs $norm_m$ d'étalonnage sont mis en mémoire pour le calcul correct de l'énergie et on le multiplie par la somme des signaux $\sum_{i=1}^{t} q_{n_i}$ de pixels de photodétecteur et on le divise par la somme des probabilités $\mu_{m_{ML},n_i}$ suivant l'équation (8).

9.  Procédé suivant la revendication 8,
    **caractérisé**
    **en ce que**, dans le cas de mise en œuvre dans des FPGAs (31), on déplace la division dans un calculateur de reconstruction d'image.

10. Procédé suivant l'une des revendications 1 à 9,
    **caractérisé**
    **en ce que** l'on déclenche des évènements de scintillation de particules, constituées du groupe des photons gamma, des particules α, des particules β, des leptons, des photons de rayons X ou de particules composées de particules élémentaires, comme des mésons, des baryons ou des ions.

Figur 1

Figur 2

Figur 3

Figur 4

30

31

32

Figur 5

30

32

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CH. W. LERCHE**. Fast circuit topology for spatial signal distribution analysis. *17th REAL-TIME CONFERENCE - IEEE-NPSS TECHNICAL COMMITTEE ON COMPUTER APPLICATIONS IN NUCLEAR AND PLASMA SCIENCE; 2010, PISCATAWAY, NJ, USA*, 01 January 2010, 1-8
- **CHEN-YI, L.** ; **GOERTZEN, A.** Improved event positioning in a gamma ray detector using an iterative position-weighted centre-of-gravity algorithm. *Physics in Medicine & Biology*, 2013, vol. 58 (14), 189
- **LERCHE, C. W. et al.** Maximum likelihood positioning and energy correction for scintillation detectors. *Physics in Medicine & Biology*, 2016, vol. 61 (4), 1650
- **SCHUG, D. et al.** Data Processing for a High Resolution Preclinical PET Detector Based on Philips DPC Digital SiPMs. *IEEE TRANSACTIONS ON NUCLEAR SCIENCE*, 2015, vol. 62 (3), 669
- **DEWITT, D. et al.** Design of an FPGA-based algorithm for real-time solutions of statistics-based positioning. *IEEE transactions on nuclear science*, 2010, vol. 57 (1), 71-77
- **JOHNSON-WILLIAMS, N. et al.** Design of a Real Time FPGA-Based Three Dimensional Positioning Algorithm. *IEEE Transactions on Nuclear Science*, 2010, vol. 58 (1), 26-33
- **WANG, Y. et al.** An FPGA-Based Real-Time Maximum Likelihood 3D Position Estimation for a Continuous Crystal PET Detector. *IEEE Transactions on Nuclear Science*, 2016, vol. 63 (1), 37-43
- **SCHUG, D. et al.** Initial PET performance evaluation of a preclinical insert for PET/MRI with digital SiPM technology. *Physics in Medicine & Biology*, 2016, vol. 61, 2851-2878
- **GOLDSCHMIDT, B. et al.** Software-based real-time acquisition and processing of PET detector raw data. *IEEE transactions on biomedical engineering*, 2015, vol. 63 (2), 316-327
- Low cost hardware implementation of logarithm approximation.. **GUTIERREZ, R.** ; **VALLS, J.** Transactions on Very Large Scale Integration (VLSI) Systems. IEEE, 2010, vol. 19, 2326-2330